**Europäisches Patentamt**

**European Patent Office**

**Office européen des brevets**

(19)

(11) Publication number : **0 046 585 B2**

(12) # NEW EUROPEAN PATENT SPECIFICATION

(45) Date of publication of the new patent specification : **09.12.92 Bulletin 92/50**

(51) Int. Cl.⁵ : **F02G 1/053, F25B 9/00, F16J 1/02, F04B 39/04**

(21) Application number : **81106527.5**

(22) Date of filing : **21.08.81**

(54) Refrigerator with a clearance seal compressor.

(30) Priority : **25.08.80 US 181152**

(43) Date of publication of application :
**03.03.82 Bulletin 82/09**

(45) Publication of the grant of the patent :
**23.10.85 Bulletin 85/43**

(45) Mention of the opposition decision :
**09.12.92 Bulletin 92/50**

(84) Designated Contracting States :
**CH DE FR GB IT LI NL**

(56) References cited :
**EP-A- 0 037 102**
**FR-A- 2 444 174**
**GB-A- 524 036**
**GB-A- 643 435**
**GB-A- 771 334**
**GB-A- 2 057 091**
**US-A- 3 928 974**

(56) References cited :
**US-A- 3 958 841**
**US-A- 4 044 558**
**R.W. Breckenridge et al:**
**"Rotary-reciprocating cryogenic refrigeration system studies - Part I Analysis", Technical reportAFFDL-TR-71-115, Part I, September 1971; A.F. Flight Dynamics Laboratory (FE-1), Wright-Patterson AFB, Ohio 45433; pages i to xiand 1 to 20.**

(73) Proprietor : **HELIX TECHNOLOGY CORPORATION**
**266 Second Avenue**
**Waltham Massachusetts 02254 (US)**

(72) Inventor : **Holland, Noel J.**
**18 Manor Avenue**
**Burlington Massachusetts 01803 (US)**

(74) Representative : **Kraus, Walter, Dr. et al**
**Patentanwälte Kraus, Weisert & Partner**
**Thomas-Wimmer-Ring 15**
**W-8000 München 22 (DE)**

EP 0 046 585 B2

# Description

The invention refers to a helium cryogenic refrigerator of the type comprising a refrigerator cylinder, a reciprocating element within the refrigerator cylinder for expanding and thus cooling helium gas therein, and a compressor including a compressor piston within a compressor cylinder for compressing helium gas to be expanded in the refrigerator cylinder, the compressor piston being driven by a rotary motor through a crank mechanism and being guided by the compressor cylinder against radial movement in its reciprocating movement within the compressor cylinder and there being a seal against helium gas flow between the ends of the compressor cylinder.

A Stirling cryogenic refrigeration system includes a reciprocating compressor which provides a sinusoidal variation in pressure in a working volume of gas. The working volume includes the head space above the compressor piston and the internal voids in a refrigerator cold finger. In the case of a split Stirling system, the working volume also includes a gas line interconnecting the above spaces. Within the cold finger, a displacer moves in timed relationship with the sinusoidal pressure variations to provide cooling at one end of the cold finger.

The usual Stirling cycle includes an electric motor driven compressor, and the invention will be described with reference to a split Stirling cycle of that type. The invention is also applicable to Gifford-McMahon type refrigerators such as disclosed in US-A-2 906 101 and US-A-2 966 035 in which pressure control valves are positioned between the compressor and the cold finger.

Generally, the fluid seal about the compressor piston is an annular lip or split ring seal. One problem encountered in Stirling systems results from the fact that there is always some leakage past the dynamic seal between the reciprocating compressor piston and its cylinder. The leakage is between the working volume and a control volume on the opposite side of the piston. Where there is a greater leakage in one direction than in the other with movement of the piston, the mean value of the pressure in the working volume of gas tends to be above or below the mean pressure of the control volume. If the direction or magnitude of that leakage changes during the life of the refrigerator, the refrigerator suffers a change in the pressure wave for which the cold finger and displacer were designed. The result is a significant drop in the efficiency and capacity of the device.

A helium cryogenic refrigerator of the above type to which the invention refers is disclosed in the FR-A-2 444 174. The fluid seal in the compressor of this cryogenic refrigerator is a ring of U-shape provided in a groove in the compressor piston such that at least one lip of one leg of the U-shape contacts elastically the cylinder and that at least one lip of the other leg of the U-shape contacts elastically the piston. The fluid seal does not prevent some leakage past the seal between the reciprocating compressor piston and the cylinder as pointed out above.

The GB-A-771 334 describes a compressor defining a closed working volume of gas which is compressed and expanded by a piston in the compressor cylinder, in which a fluid seal between the ends of the compressor piston is a low friction clearance seal between a hard, smooth piston wall and a hard, smooth cylinder wall; the low friction clearance seal consisting of a labyrinth packing in combination with a piston skirt which will restrict the flow of leakage gases to the carter. But there is no indication that a helium refrigerant is contemplated. Further, the clearance seal across the piston does not serve to guide the piston element. Rather, an oil lubricated crosshead serves that purpose. It is specifically stated that with that crosshead assembly, the piston runs in the cylinder without making contact with the walls of the cylinder. An arrangement such as presented in the GB-A-771 334 would not be at all suitable to a helium cryogenic refrigerator because the oil lubrication to the crosshead would still contaminate the helium. The entire helium environment of the refrigerator must be hermetically sealed and free of oil and other such lubricants. Also, it is expected that the clearance contemplated by the GB-A-771 334 would be adequate to seal conventional refrigerants such as freon, but not to seal helium which requires a much closer clearance. With the present invention, conventional piston seals which are subject to wear are avoided and the only lubricant is the helium gas itself.

Further the EP-A-0 037 102, published on a later date but having an earlier priority date than the present invention refers to a regrigerator having a compressor for compressing a working volume of gas and a displacer which reciprocates in a housing, the working volume of gas and a spring volume of gas being in contact with opposing end surfaces of the displacer and separated by a fluid seal surrounding the displacer, the displacer being driven substantially entirely by pressure differential, and the displacer movement being determined by retarding force on the displacer. In this refrigerator all fluid seals which might exert a braking action on the displacer being virtually dragless clearance seals, there being means other than the clearance seals for friction loading the displacer to retard movement of the displacer in each direction of movement.

Finally in the US-A-3 928 974 and US-A-4 044 558 there are disclosed thermomechanical oscillators for generating electricity, pressurizing fluid or pumping heat. When the oscillator is used as a refrigerator, a linear motor drives a ceramic piston in a ceramic sleeve. In the oscillator ceramic displacers reciprocate in ceramic sleeves in an external regenerator. The displacers are driven by pressure differentials between the ends of the regenerator. In the US-A-4 044 558 reference is made to silicon nitride or silicon carbide ceramic with the piston match ground to a floating sleeve. Further reference is made to helium and to gas lubrication.

However in the US-A-3 928 974 and US-A-4 044 558 there is utilized a linear drive motor. In a linear motor system, the compressor piston would not be subjected to the same side forces as a piston driven by a rotary motor through a crank mechanism.

It is the object of the present invention to provide a helium cryogenic refrigerator of the type indicated above in which the compressor whose piston is subjected to large side forces is constructed such that the mean value and the peak to peak differential of the sinusoidal pressure variations in the compressed working volume of gas is stabilized for a long refrigerator life and that contrary to Stirling and Gifford-McMahon refrigerators do not result, with wear, particles from the compressor seals which contaminate the helium refrigerant and which contaminants result in a significant degradation of performance and shorten the operating life of the refrigerator, so that the refrigerator according to the invention has a longer life than prior systems due to lesser wear to the compressor section of the refrigerator.

This object is achieved according to the invention in that the gas seal between the ends of the compressor piston is a low friction clearance seal between a hard, smooth piston wall and a hard, smooth cylinder wall which serve as piston bearing surfaces, the surfaces of the piston wall and of the cylinder wall both having a hardness of > 60 on the Rockwell C scale, and the only lubricant in the gas seal is helium gas.

This has the advantage that with no lubricant between the two walls and with virtually no debris worn from the walls over hundreds of hours of operation, the refrigerating gas is not subject to contamination from the compressor. Also, there is so little wear to the clearance seal that the pressure wave in the working volume undergoes only minimal changes over hundreds of hours of operation.

The mean pressure in the working volume can be held above or below the mean pressure in the control volume by structuring the compressor piston and cylinder such that the length of the clearance seal varies through the piston stroke. To provide a relatively high mean pressure in the working volume the clearance seal has its maximum length when the pressure in the working volume is at its peak. The length of the seal can be varied by providing a cylinder which is sufficiently short that the piston extends beyond the cylinder at one end of its stroke.

Other features of the invention are stated in the sub-claims.

The invention will be apparent from the following more particular description of a preferred embodiment of the invention, as illustrated in the accompanying drawings in which like reference characters refer to the same parts throughout the different views. The drawings are not necessarily to scale, emphasis instead being placed upon illustrating the principles of the invention.

Fig. 1 is a schematic of a split Stirling refrigerator system embodying the present invention;

Figs. 2-5 are simplified schematics of the system of Fig. 1 illustrating four steps in the refrigeration cycle;

Fig. 6 is a cross-sectional view of the compressor piston of Fig. 1;

Figs. 7A-7C are graphical illustrations of the working pressure and the control pressure in the compressor of Fig. 1 at three points in the operating life of the compressor.

Description of a Preferred Embodiment

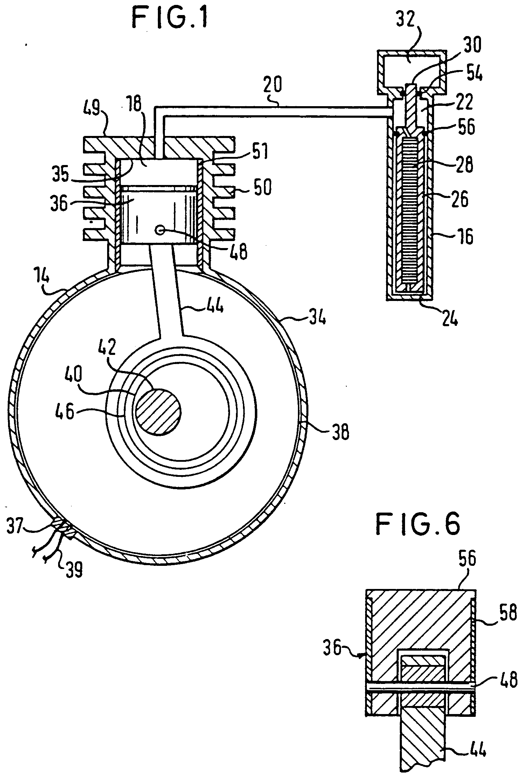

A split Stirling refrigeration system is shown in Fig. 1. This system includes a reciprocating compressor 14 and a cold finger 16. The compressor provides a sinusoidal pressure variation in a pressurized refrigeration gas in the head space 18. That pressure variation is transmitted through a helium supply line 20 to the cold finger 16.

Within the cylinder of the cold finger 16 a cylindrical displacer, a piston element 26, is free to move upward and downward to change the volumes of the warm space 22 and the cold space 24 within the cold finger. The displacer 26 houses a regenerative heat exchanger 28 comprised of several hundred fine-mesh copper screen discs stacked to form a cylindrical matrix. Other regenerators, such as those with stacked balls, are also known. Helium is free to flow through the regenerator between the warm space 22 and the cold space 24. As will be discussed below, a piston element 30 extends upward from the displacer 26 into a gas spring volume 32 at the warm end of the cold finger.

The compressor 14 includes a gas tight housing 34 which encloses a reciprocating piston pump element 36 driven through a crank mechanism from an electrical motor 38. The crank mechanism includes a crank cam 40 fixed to the motor drive shaft 42. A connecting arm 44 is driven by the cam through a bearing 46 which may be two close fitting ceramic sleeves. The arm 44 in turn drives the piston 36 through a wrist pin 48. Electrical power is provided to the motor 38 from electrical leads 39 through a fused ceramic feedthrough connector 37.

Heat of compression and heat generated by losses in the motor are rejected to ambient air by thermal conduction through the fins 50 surrounding the compressor cylinder.

The refrigeration system of Fig. 1 can be seen as including three isolated volumes of pressurized gas. The crankcase housing 34 is hermetically sealed to maintain a control volume of pressurized gas within the crankcase below the piston 36. The piston 36 acts on that control volume as well as on a working volume of gas. The working volume of gas comprises the gas in the space 18 at the upper end of the compressor cylinder 35, the gas in the supply line 20, and the gas in the spaces 22 and 24 and in the regenerator 28 of the cold finger 16. The third volume of gas is the gas spring volume 32 which is sealed from the working volume by a piston seal 54 surrounding the drive piston 30. A conventional piston seal is shown but a more preferred seal arrangement is described in my copending U.S. application Serial No. 135,141, filed March 28, 1980.

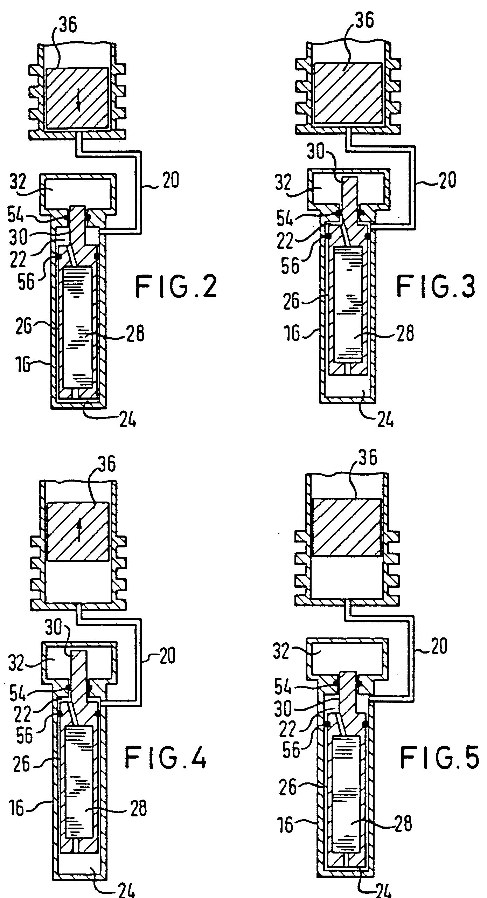

Operation of the split Stirling refrigeration system of Fig. 1 can be best understood with reference to Figs. 2-5. At the point in the cycle shown in Fig. 2, the displacer 26 is at the cold end of the cold finger 16 and the compressor is compressing the gas in the working volume. This compressing movement of the compressor piston 36 causes the pressure $P_w$ in the working volume to rise from the minimum pressure to a maximum pressure. The pressure in the gas spring volume 32 is stabilized at some level between the minimum and maximum pressure levels of the working volume. Thus, at some point the increasing pressure in the working volume creates a sufficient pressure difference across the drive piston 30 to overcome the friction of displacer seal 56 and drive seal 54. The piston and displacer then move rapidly upward to the position of Fig. 3. With this movement of the displacer, high-pressure working gas at ambient temperature is forced through the regenerator 28 into the cold space 24. The regenerator absorbs heat from the flowing pressurized gas and reduces that gas to cryogenic temperature.

With the sinusoidal drive from the crank shaft mechanism, the compressor piston 36 now begins to expand the working volume as shown in Fig. 4. With expansion, the high pressure helium in the cold space 24 is cooled even further. It is this cooling in the cold space 24 which provides the refrigeration for maintaining a temperature gradient of over 200°K over the length of the regenerator.

At some point in the expanding movement of the piston 36, the pressure in the working volume drops sufficiently below that in the gas spring volume 32 for the gas pressure differential to overcome seal friction. The piston 30 and the displacer 26 are then driven downwardly to the position of Fig. 5, which is also the starting position of Fig. 2. The cooled gas in the cold space 24 is thus driven through the regenerator to extract heat from the regenerator.

It should be understood that, as is well known in the art, stroke control means may be provided to assure that the displacer does not strike either end of the cold finger cylinder. Such control means may include one way valves and ports suitably located in the drive piston 30.

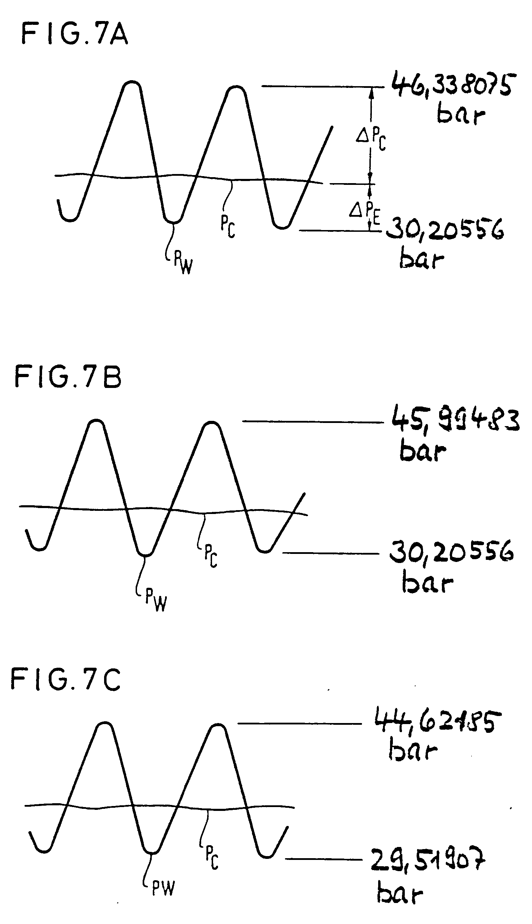

Attention is now directed to operation of the compressor piston seal. The respective pressures $P_w$ and $p_c$ in the working volume and control volume follow sinusoidal curves 180° out of phase. Because the control volume is much larger than the working volume, movement of the piston 36 has a lesser effect on pressure in that volume, as illustrated in Fig. 7A. At the end of the compression stroke in compressing the working volume, there exists a pressure differential $\Delta P_c$ across the seal. At the end of the expansion stroke in expanding the working volume, there exists a pressure differential $\Delta P_E$.

Now consider the situation in which the compressor piston seal tends to have greater leakage in one direction than in another. For example, due to the nature of the seal, a pressure differential $\Delta P_c$ at the compression end of the piston stroke might result in the same leakage as a greater pressure differential $\Delta P_E$ at the expansion end of the stroke. The working pressure and the control pressure tend to stabilize to different mean pressures which equalize the gas leakage. For example, they might stabilize to the condition shown in Fig. 7A.

On the other hand, if equal pressure differentials $\Delta P_c$ and $\Delta P_E$ resulted in equal gas leakage in the two directions past the seal, the system would stabilize to a condition where the mean pressures in the control and working volumes are equal.

If a refrigeration system could be expected to stabilize with a constant mean value and peak-to-peak differential in the working volume pressure, the system could be designed to operate in that condition efficiently. For example, if it were known that the maximum pressure of the working volume would always be about equal to the mean pressure of the control volume, the control volume pressure could be set sufficiently high to draw the working pressure to the desired level.

Also, the structural elements within the system could be economically designed to meet the maximum stresses. For example, the connecting rod 44 would have to withstand high compressive forces if the refrigeration system operated with a high working volume pressure relative to the control volume pressure. On the other hand, high tensile stresses must be met if the system operates with a relatively low working volume pressure.

A major problem of most conventional seal arrangements for the compressor is that with wear of the seal the leakage in the two directions past the seal changes in magnitude. As a result, the pressure wave in the working volume is not stable through a sufficiently long life of the compressor. When the pressure becomes unstable due to seal wear the efficiency and capacity of the refrigerator are greatly reduced. Further, wear of the seal may result in debris which contaminates the refrigerant such as helium gas.

As shown in Figs. 1 and 6, the fluid seal between the two ends of the compressor piston 36 is a lubricant free clearance seal. The use of a lubricant should be avoided to avoid contamination of the helium refrigerant. In effect, the gas refrigerant fills the small gap between the piston and cylinder walls to provide gas lubrication.

To provide for low friction movement of the piston within the cylinder and to minimize wear to the clearance seal surfaces, it is imperative that those surfaces be of very hard, smooth material. The hardness of those surfaces should be at least 60 on the Rockwell C scale and is preferably over 70 on the C scale. The abrasion resistance should be such that the wear rate of the two close fitting moving parts is less than about one micro-inch per hour. With respect to smoothness, the finish should be better than 16 microinches.

The clearance seal elements, a piston sleeve 58 and a cylinder sleeve 51, are made of ceramic, cermet, hardened steel, or other hard, abrasion resistant material. Cermets are materials comprising processed ceramic particles bonded with metal and used in high strength, abrasion resistant applications. Materials comprising ceramic are particularly suited for use in forming the clearance seal because ceramic does not suffer from the problem of galling, a welding action, that might result from the use of metal clearance seal surfaces. Ceramics include compounds of any of the metals or metal-like materials in groups II, III or IV of the periodic table combined with a non-metal, typically oxygen, nitrogen, sulfur, carbon, boron or silicon. Ceramics are characterized by being hard and abrasion resistant. Examples of such ceramics are aluminum oxide (alumina), beryllium oxide (beryllia), titanium dioxide, titanium diboride, boron carbide, silicon nitride and pyrolytic graphite. Other substances may be added to a ceramic to improve its characteristics. Alumina ($Al_2O_3$) is a preferred ceramic material; and titanium carbide mixed with alloy steels such as that sold under the registered trademark Ferro-Tic, is a preferred cermet. Although the piston and cylinder need not be solid ceramic or cermet, at least a bulk layer of ceramic should be provided on each of the piston and cylinder at the clearance seal to assure that these elements display the bulk characteristics of the ceramic.

For optimum performance of a 14,2748 mm diameter, 9,5377 mm long compressor piston, the radial clearance of the clearance seal has been calculated to be 0,00254 mm. A clearance within the range of 0,001524 mm to 0,00381 mm will also provide satisfactory results.

To provide for heat dissipation from the compressor, the compressor casing 49 is of a high conductivity aluminum. A ceramic sleeve 51 is positioned within the casing 49 to provide the hard, smooth cylinder wall required for the clearance seal. In this case the sleeve is bonded to the casing by crimping the casing over the end of the sleeve. The sleeve 51 has a thickness of 1,7526 mm.

The ceramic 51 has a fairly low coefficient of thermal expansion, about $7 \times 10^{-6}/°C$. The aluminum, however, has a coefficient of expansion of about three times that amount. But because of the high compressive strength of the ceramic, contraction and expansion of the aluminum casing 49 has virtually no effect on the inner diameter of the sleeve.

To reduce fabrication and material costs, the piston head 36 comprises a steel insert 56 within a ceramic sleeve 58. Because the ceramic does not have high tensile strength, the material of the insert has been selected to provide a close match between the coefficients of thermal expansion of the insert and sleeve. Stainless steel having a coefficient of thermal expansion of about 50% greater than the ceramic has been chosen. This sleeve is epoxied to the piston and that epoxy provides a cushion for some differential in the expansion or contraction of the sleeve and insert. The sleeve 58 has a thickness of 1,016 mm.

The compressor shown in Figs. 1 and 6 was used with a dummy working volume in tests which provided the results shown in Figs. 7A-7C. The compressor was run for 1,000 hours primarily at 20°C. Within that thousand hours, the compressor was also run for 32 hours at 55°C and 17.5 hours at -54°C. After 515 hours, an unusually long operating period in itself, the epoxy holding the ceramic sleeve 54 failed and that sleeve was replaced. The original piston configuration was used throughout the test.

The compressor pressure waves after 30 hours, 490 hours, and 878 hours are shown in respective drawings in Fig. 7. With a crankcase pressure of 36,334935 bar the initial pressure wave of the compressor ranged from 31,18626 bar to 47,318775 bar. The clearance of the clearance seal at that point was 0,001524 mm. After 490 operating hours (Fig. 7B) the clearance was still 0,001524 mm and the pressure range was from 31,18628 bar to 46,97553 bar. Finally, after 878 hours (Fig. 7C), the clearance was 0,00381 mm and the pressure range was 30,49977 bar to 45,60255 bar.

It can be seen in each of Figs. 7A-7C that the mean value of the pressure in the working volume was slightly greater than the mean pressure in the crankcase volume. It is believed that this higher pressure in the working volume resulted from the fact that the lower end of the piston 36 dropped below the compressor cylinder at the lower end of its stroke. At that point the length of the clearance seal was less than it was at the opposite end of the stroke. Thus, the seal length was at its minimum when the crankcase volume was in compression. There was a resultant tendency for greater leakage from the crankcase volume to the working volume at the lower end of the stroke than from the working volume to the crankcase volume at the upper end of the stroke. This resulted in a pumping up of the working volume pressure to the stable situation shown in Figs. 7.

It can be seen in Fig. 1 that the inside surface of the sleeve 51 is beveled toward its lower end. This bevel increases the gap between the two sleeves at the lower end of the cylinder and provides for the varying seal length through the stroke of the piston.

## Claims

1. A helium cryogenic refrigerator of the type comprising a refrigerator cylinder (16), a reciprocating element (26) within the refrigerator cylinder (16) for expanding and thus cooling helium gas therein, and a compressor (14) including a compressor piston (36) within a compressor cylinder (35) for compressing helium gas to be expanded in the refrigerator cylinder (16), the compressor piston (36) being driven by a rotary motor (38) through a crank mechanism (40, 44, 46) and being guided by the compressor cylinder (35) against radial movement in its reciprocating movement within the compressor cylinder (35) and there being a seal against helium gas flow between the ends of the compressor cylinder (35), said refrigerator being characterized in that the gas seal between the ends of the compressor piston (36) is a low friction clearance seal between a hard, smooth piston wall (58) and a hard, smooth cylinder wall (51) which serve as piston bearing surfaces, said surfaces of said piston wall (58) and of said cylinder wall (51) both having a hardness of > 60 on the Rockwell C scale, and the only lubricant in said gas seal is said helium gas.

2. A refrigerator as claimed in Claim 1, characterized in that the compressor piston and cylinder walls (58, 51) comprise ceramic material.

3. A refrigerator as claimed in Claim 2, characterized in that the ceramic is alumina.

4. A refrigerator as claimed in Claim 1, characterized in that the radial clearance of the clearance seal is about 0.00254 mm.

5. A refrigerator as claimed in Claim 1, characterized in that the length of the clearance seal varies through the stroke of the compressor piston (36) to provide a mean pressure within the working volume different from that at the opposite end of the compressor piston (36).

6. A refrigerator as claimed in Claim 5, characterized in that the clearance seal has its longest length when the working volume is at its highest pressure ($P_w$).

7. A refrigerator as claimed in Claim 5, characterized in that the cylinder wall (51) of the compressor cylinder (35) is shaped to provide a greater space between the compressor cylinder (35) and the compressor piston (36) at the end of the compressor piston (36) opposite to the working volume.

8. A refrigerator as claimed in Claim 7, characterized in that the compressor cylinder (35) is beveled.

9. A refrigerator as claimed in Claim 1, characterized in that the clearance seal is between ceramic sleeves (58, 51) respectively surrounding and within a metal core (56) and metal casing (49).

## Patentansprüche

1. Kälteerzeugende Helium-Kühleinrichtung der Art, welche folgendes umfaßt: einen Kühleinrichtungszylinder (16), ein sich hin- und herbewegendes Element (26) innerhalb des Kühleinrichtungszylinders (16) zum Expandieren und auf diese Weise Kühlen von darin befindlichem Heliumgas und einen Kompressor (14), der einen Kompressorkolben (36) innerhalb eines Kompressorzylinders (35) zum Komprimieren von Heliumgas aufweist, das in dem Kühleinrichtungszylinder (16) expandiert werden soll, wobei der Kompressorkolben (36) mittels eines Drehmotors (38) durch einen Kurbelmechanismus (40, 44, 46) angetrieben wird und mittels des Kompressorzylinders (35) gegen eine Radialbewegung in seiner hin- und hergehenden Bewegung innerhalb des Kompressorzylinders (35) geführt ist und wobei eine Abdichtung gegen eine Heliumgasströmung zwischen den Enden des Kompressorzylinders (35) vorhanden ist, wobei die Kühleinrichtung dadurch **gekennzeichnet** ist, daß die Gasabdichtung zwischen den Enden des Kompressorkolbens (36) eine Spielabdichtung niedriger Reibung zwischen einer harten, glatten Kolbenwand (58) und einer harten, glatten Zylinderwand (51), die als Kolbenlageroberflächen dienen, ist, wobei die Oberflächen der Kolbenwand (58) und der Zylinderwand (51) beide eine Härte von >60 auf der Rockwell-C-Skala haben, und das einzige Schmiermittel in der Gasabdichtung das Heliumgas ist.

2. Kühleinrichtung nach Anspruch 1, dadurch **gekennzeichnet**, daß die Kompressorkolben- und -zylinderwand (58, 51) keramisches Material umfassen.

3. Kühleinrichtung nach Anspruch 2, dadurch **ge-**

**kennzeichnet**, daß die Keramik Aluminiumoxid ist.

4. Kühleinrichtung nach Anspruch 1, dadurch **gekennzeichnet**, daß das Radialspiel der Spielabdichtung etwa 0,00254 mm ist.

5. Kühleinrichtung nach Anspruch 1, dadurch **gekennzeichnet**, daß die Länge der Spielabdichtung über den Hub des Kompressorkolbens (36) variiert, um einen mittleren Druck innerhalb des Arbeitsvolumens vorzusehen, der sich von demjenigen am entgegengesetzten Ende des Kompressorkolbens (36) unterscheidet.

6. Kühleinrichtung nach Anspruch 5, dadurch **gekennzeichnet**, daß die Spielabdichtung ihre längste Länge hat, wenn das Arbeitsvolumen auf seinem höchsten Druck ($P_w$) ist.

7. Kühleinrichtung nach Anspruch 5, dadurch **gekennzeichnet,** daß die Zylinderwand (51) des Kompressorzylinders (35) so geformt ist, daß ein größerer Zwischenraum zwischen dem Kompressorzylinder (35) und dem Kompressorkolben (36) an dem Ende des Kompressorkolbens (36), das dem Arbeitsvolumen entgegengesetzt ist, vorgesehen wird.

8. Kühleinrichtung nach Anspruch 7, dadurch **gekennzeichnet**, daß der Kompressorzylinder (35) abgeschrägt ist.

9. Kühleinrichtung nach Anspruch 1, dadurch **gekennzeichnet,** daß die Spielabdichtung zwischen Keramikhülsen (58, 51) vorhanden ist, welche einen Metallkern (56) umgibt bzw. innerhalb eines Metallgehäuses (49) ist.

**Revendications**

1. Réfrigérateur cryogénique à l'hélium du type comprenant un cylindre de réfrigérateur (16), un élément (26) en va-et-vient dans le cylindre de réfrigérateur (16) pour détendre et par suite refroidir l'hélium gazeux qui s'y trouve, et un compresseur (14) comportant un piston de compresseur (36) dans un cylindre de compresseur (35) pour comprimer l'hélium gazeux à détendre dans le cylindre de réfrigérateur (16), le piston de compresseur (36) étant entraîné par un moteur rotatif (38) par l'intermédiaire d'un mécanisme à manivelle (40,44,46) et étant guidé par le cylindre de compresseur (35) contre un mouvement radial dans son mouvement de va-et-vient à l'intérieur du cylindre de compresseur (35), une étanchéité contre le passage d'hélium gazeux étant prévue entre les extrémités du cylindre de compresseur (35), ledit réfrigérateur étant caractérisé en ce que l'étanchéité au gaz entre les extrémités du piston de compresseur (36) est constituée par un dispositif d'étanchéité de jeu, ou par ajustement, à faible frottement entre une paroi de piston (58) dure et lisse et une paroi de cylindre (51) dure et lisse qui servent de surfaces de portée du piston, lesdites surfaces de la paroi de piston (58) et de la paroi de cylindre (51) ayant toutes deux une dureté supérieure à 60 sur l'échelle Rockwell C, et le seul lubrifiant dans l'étanchéité au gaz est l'hélium gazeux.

2. Réfrigérateur suivant la revendication 1, caractérisé en ce que les parois (58,51) du piston et du cylindre de compresseur sont en matière céramique.

3. Réfrigérateur suivant la revendication 1, caractérisé en ce que la céramique est de l'alumine.

4. Réfrigérateur suivant la revendication 1, caractérisé en ce que le jeu radial du dispositif d'étanchéité de jeu est de l'ordre de 0,00254 mm.

5. Réfrigérateur suivant la revendication 1, caractérisé en ce que la longueur du dispositif d'étanchéité de jeu varie pendant la course du piston de compresseur (36), afin d'obtenir une pression moyenne dans le volume de travail différente de celle qui existe à l'extrémité opposée du piston de compresseur (36).

6. Réfrigérateur suivant la revendication 5, caractérisé en ce que le dispositif d'étanchéité de jeu présente sa plus grande longueur lorsque le volume de travail est à sa pression ($P_w$) la plus élevée.

7. Réfrigérateur suivant la revendication 5, caractérisé en ce que la paroi de cylindre (51) du cylindre de compresseur (35) est profilée de manière à ce que l'espace entre le cylindre de compresseur (35) et le piston de compresseur (36) soit plus grand à l'extrémité du piston de compresseur (36) opposée au volume de travail.

8. Réfrigérateur suivant la revendication 7, caractérisé en ce que le cylindre de compresseur (35) est biseauté.

9. Réfrigérateur suivant la revendication 1, caractérisé en ce que le dispositif d'étanchéité de jeu est défini entre des manchons en céramique (58,51) qui sont respectivement autour d'un noyau métallique (56) et à l'intérieur d'un corps métallique (49).

# FIG.1

# FIG.6

FIG.2

FIG.3

FIG.4

FIG.5

## FIG.7A

46,338075 bar

$\Delta P_C$

$P_C$

$\Delta P_E$ 30,20556 bar

$P_W$

## FIG.7B

45,99483 bar

$P_C$

30,20556 bar

$P_W$

## FIG.7C

44,62485 bar

$P_C$

29,51907 bar

PW